# FASCICULE DE BREVET EUROPEEN

(11) **EP 2 298 571 B1**
(45) Date de publication et mention de la délivrance du brevet: **22.10.2014**
(21) Numéro de dépôt: 10165489.5
(22) Date de dépôt: 10.06.2010
(51) Int. Cl.: B42D 25/00, B42D 13/00, B42D 15/00

(54) **Document de sécurité et procédé de fabrication de ce document**
Sicherheitsdokument und dessen Herstellungsverfahren
Security document and method of making same

(30) Priorité: 11.06.2009 FR 0953866
(43) Date de publication de la demande: 23.03.2011
(73) Titulaire: Oberthur Technologies, 92300 Levallois-Perret (FR)
(72) Inventeur: Barbotin, Aurélie, 35200 Rennes (FR); Guerard, Denis, 35200 Rennes (FR)
(74) Mandataire: Delumeau, François Guy

(56) Documents cités:
- WO-A1-98/19870
- WO-A1-2005/090091
- US-A1- 2008 131 669

## Description

La présente invention concerne le domaine technique des documents de sécurité comportant des données, notamment personnelles et de sécurité, pour l'identification d'un porteur du document de sécurité, tels que par exemple les passeports.

Généralement, un passeport comprend un livret formé par une pluralité de feuilles assemblées entre elles le long d'une ligne de reliure, parmi lesquelles au moins une feuille porte des données personnelles du porteur, c'est-à-dire relatives à son identité, dites données de personnalisation, telles que sa photographie, son nom, son adresse personnelle et des données de sécurisation tels que des filigranes, des fils de sécurité ou encore un graphisme particulier, etc.

Cette feuille de données comprend également habituellement un film plastique transparent agencé pour recouvrir les données portées par la feuille et ainsi les protéger d'une falsification.

Il est connu de former cette feuille par lamination de plusieurs couches entre elles de manière à former un laminat relativement rigide pouvant incorporer des éléments de sécurité. Le format de la feuille est choisi de manière à ce qu'il dépasse sensiblement de la ligne de reliure et ce afin de permettre l'assemblage de la feuille laminée avec les autres feuilles du livret.

On connaît déjà dans l'état de la technique, notamment du document EP 0 917 966, un tel document de sécurité comprenant une feuille de données laminée. La feuille de données comprend une première région portant les données dans laquelle les couches sont assemblées entre elles de manière à former un ensemble inséparable et une deuxième région, s'étendant au-delà de la ligne de reliure, dans laquelle au moins certaines des couches de la feuille sont séparées les unes des autres.

La séparation des couches entre elles dans cette deuxième région permet d'améliorer les propriétés de résistance à la flexion de la feuille laminée et d'éviter des ruptures dans cette dernière.

Afin de réaliser cette séparation des couches dans la deuxième région, il est proposé, dans ce document, soit de former une zone dépourvue de colle au-delà de la ligne de reliure, soit d'appliquer un cycle de lamination à la première région en épargnant la deuxième région de ce cycle soit encore de fournir des films anti-adhésifs entre les couches de la deuxième région ce qui permet de prévenir leur collage dans cette deuxième région.

Ceci présente l'inconvénient d'être relativement complexe à mettre en oeuvre puisqu'il est nécessaire de prévoir un traitement différent spécifique à chacune des régions de la feuille laminée.

Le document WO 2005/090091 A1 décrit un document de sécurité selon le préambule de la revendication 1.

L'invention a notamment pour but de proposer de fabriquer une telle feuille de façon simple et efficace sans nécessiter de traitements spécifiques pour chaque région de la feuille de données.

A cet effet, l'invention a notamment pour objet un document de sécurité, tel qu'un passeport, comprenant une pluralité de feuilles reliées entre elles le long d'une ligne de reliure pour former un livret, parmi lesquelles au moins une feuille comprend au moins deux couches externes et une couche interne intercalée entre les deux couches externes, les couches externes et interne ayant chacune un format défini de manière à ce que les deux couches externes dépassent de la ligne de reliure afin de relier la feuille de données au livret, **caractérisé en ce que** la couche interne a un format défini de manière à ce qu'elle ne dépasse pas de la ligne de reliure **et en ce que** les matériaux des couches externes et interne sont choisis de manière à ce que la lamination des couches entre elles, avec des paramètres de lamination prédéterminés, provoque l'adhérence de la couche interne avec les couches externes sans entraîner d'adhérence des couches externes entre elles au-delà de la ligne de reliure.

Ainsi, les matériaux de la couche interne et des couches externes sont choisis de manière à ce que lors de l'opération de laminage, seule la couche interne atteigne ses conditions de lamination de fusion lui permettant d'adhérer aux deux autres couches.

Comme la couche interne a un format plus petit que les couches externes, la partie laminée est nécessairement limitée par le format de la couche interne et est donc en retrait de la ligne de reliure. En revanche, conformément à l'invention, avec les paramètres de lamination prédéterminés, les deux couches externes ne laminent pas entre elles et restent séparées sans adhérer l'une à l'autre au moins au-delà de la ligne de reliure.

Ceci permet ainsi de séparer les couches dans la région de reliure tout en les liant dans la région portant les données de manière simple, efficace et peu coûteuse en une seule opération et sans nécessiter de recourir à des traitements spécifiques en fonction des régions de la feuille de données.

De préférence, les couches externes sont réalisées dans le même matériau.

De préférence, le matériau d'au moins l'une des couches externes est à base de polyoléfine poreuse ayant une quantité prépondérante de charge silicieuse.

Le matériau des couches externes est par exemple le matériau synthétique de la marque Teslin®. Ce matériau est commercialisé par la société PPG Industries, Inc.

De préférence, la couche interne est réalisée dans un matériau comprenant essentiellement du PVC (polychlorure de vinyle).

De façon optionnelle, la feuille laminée comprend au moins un élément de sécurité, tel qu'un circuit électronique composé d'une puce électronique et/ou d'une antenne.

Les paramètres de lamination prédéterminés sont choisis une température de lamination et/ou une pression de lamination.

Les paramètres de lamination prédéterminés comprennent par exemple une température comprise entre 10°C et 200° C et une pression comprise entre 10 et 200 Newton/cm².

De préférence, au moins l'une des couches externes comprenant une face portant des données, la feuille comprend en outre une couche transparente de protection des données s'étendant sur cette face.

De préférence, la couche transparente est du type marquable au laser et les données sont imprimées au moyen d'un faisceau laser.

Par exemple, la couche transparente est réalisée dans un matériau comprenant essentiellement du polyéthylène téréphtalate glycol et du polycarbonate.

L'invention a encore pour objet un procédé de fabrication d'un document de sécurité, **caractérisé en ce que** le document étant selon l'invention, le procédé comprend une étape de laminage des couches entre elles à des paramètres de lamination prédéterminés pour provoquer l'adhérence de la couche interne avec les deux couches externes sans provoquer d'adhérence entre les deux couches externes entre elles au-delà de la ligne de reliure.

D'autres caractéristiques et avantages de l'invention apparaîtront à la lumière de la description qui suit, faite en référence aux dessins annexés dans lesquels :
- la figure 1 représente un document de sécurité comprenant une feuille laminée selon l'invention ;
- la figure 2 représente une vue schématique en coupe de la feuille laminée de la figure 1 ;
- la figure 3 représente une vue de dessus d'une feuille laminée dans laquelle une antenne et une puce sont incorporées et sont visibles par transparence sur cette figure ;
- les figures 4 et 5 illustrent des étapes d'un procédé de fabrication du passeport de la figure 1.

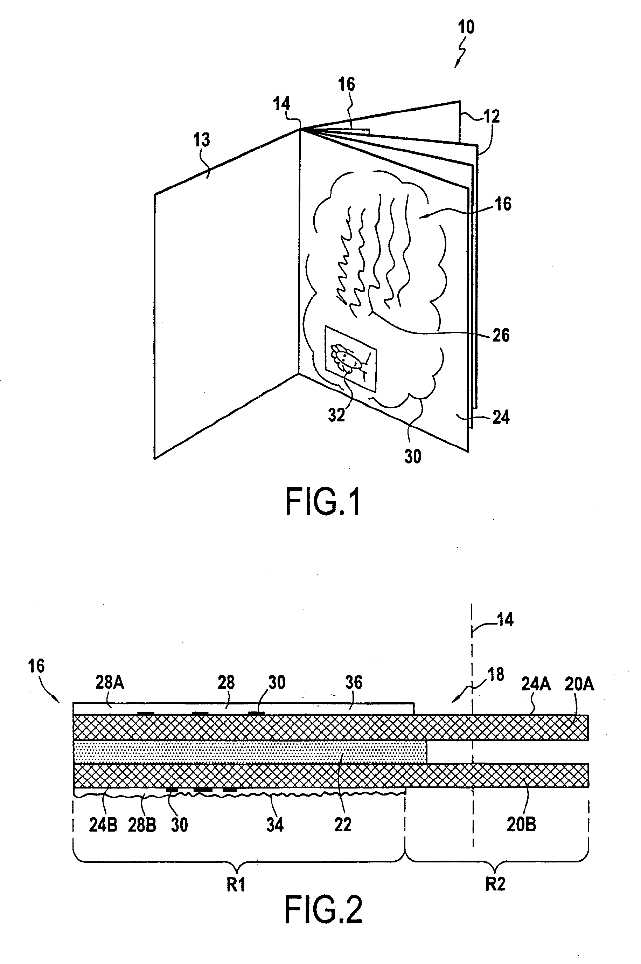

On a représenté sur **la** **figure 1****,** un document de sécurité désigné par la référence générale 10. Le document de sécurité est dans l'exemple illustré un passeport.

Le passeport 10 comprend une pluralité de feuilles 12 reliées entre elles le long d'une ligne 14 de reliure pour former un livret.

Par ailleurs, le passeport 10 comprend une couverture rigide 13 protégeant les feuilles 12 plus souples. Cette couverture rigide 13 permet de protéger les feuilles internes du livret d'une dégradation liée à sa manipulation ou à l'environnement du passeport 10.

Chaque feuille 12 a une fonction spécifique liée par exemple à l'identification du détenteur du document de sécurité 10 ou encore liée à la sécurisation du document.

Comme on peut le voir sur **la** **figure 1****,** les feuilles 12 sont par exemple doubles et pliées en deux de manière à être rapportées au livret le long de la ligne de reliure 14.

Plus précisément, au moins une feuille 16 (représentée en détail sur **la** **figure 2**) parmi la pluralité de feuilles 12 est formée par un ensemble laminé 18 de couches réalisées dans des matériaux divers. Comme cela est illustré sur **la** **figure 2****,** cet ensemble laminé 18 comprend au moins deux couches externes 20A, 20B et une couche interne 22 intercalée entre les deux couches externes 20A, 20B.

En outre, les couches externes 20A, 20B et interne 22 ont chacune un format défini de manière à ce que seules les deux couches externes 20A, 20B dépassent de la ligne de reliure 14 afin de relier la feuille 16 au livret. De préférence, les couches externes 20A, 20B ont un format identique.

En outre, plus particulièrement, la couche interne 22 a un format défini de manière à ce qu'elle ne dépasse pas de la ligne de reliure 14. Dans l'exemple décrit, la couche interne 22 s'étend même en retrait de la ligne de reliure 14.

En particulier, grâce à cet agencement des couches entre elles, l'épaisseur de la feuille 16 est relativement réduite dans la zone de la ligne de reliure 14 ce qui permet de faciliter l'opération de reliure dans cette zone. Par exemple, la reliure est une couture réalisée au moyen d'une machine (non représentée) munie d'un pied de biche destiné à être déplacé le long de la ligne de reliure 14. Ainsi, le pied de biche se déplace dans une zone de faible épaisseur ce qui facilite l'opération de couture.

Par exemple, les couches externes 20A, 20B ont une forme générale rectangulaire de longueur environ 125 mm et de largeur environ 100 mm alors que la couche interne 22 a une longueur d'environ 125 mm et une largeur sensiblement inférieure à celle des couches externes 20A, 20B, d'environ 80 mm. Ainsi, la couche interne 22 s'étend environ 5 mm en retrait de la ligne de reliure 14 et les couches externes 20A, 20B dépassent d'environ 15 mm au-delà de la ligne de reliure 14.

La pile de couches externes 20A, 20B et interne 22 délimite donc deux régions : une première région R1 dans laquelle les couches externes 20A, 20B et interne 22 sont superposées et une deuxième région R2 dans laquelle les couches externes 20A, 20B sont en regard l'une de l'autre.

Dans l'exemple illustré, la ligne de séparation des régions R1, R2 ne coïncide pas avec la ligne de reliure 14. Toutefois, en variante, la ligne de séparation des régions peut coïncider avec la ligne de reliure 14, c'est-à-dire que la couche interne 22 s'étend jusqu'à la ligne de reliure 14.

En particulier, les matériaux des couches externes 20A, 20B et interne 22 sont choisis de manière à ce que la lamination à des conditions prédéterminées des couches entre elles provoquent l'adhérence de la couche interne 22 avec les couches externes 20A, 20B sans provoquer l'adhérence des couches externes 20A, 20B entre elles au-delà de la ligne de reliure 14.

Ainsi, la première région R1 forme un laminat inséparable du fait de l'adhérence de la couche interne 22 avec les couches externes 20A, 20B alors que dans la deuxième région R2, les couches externes 20A, 20B n'adhèrent pas entre elles et sont donc séparées les unes des autres. Cette séparation des couches externes 20A, 20B au-delà de la ligne de reliure 14 confère à cette feuille de données des propriétés de flexibilité en évitant les risques de cassure de la feuille laminée 16.

De préférence, les couches externes 20A, 20B sont réalisées dans le même matériau. Par exemple, les couches externes 20A, 20B sont réalisées dans un matériau à base de polyoléfine poreuse ayant une quantité prépondérante de charge silicieuse. Par exemple, le matériau comprend essentiellement du papier synthétique de la marque Teslin®.

Ce matériau est commercialisé par la société PPG Industries, Inc. Parmi les nombreuses propriétés de ce matériau, il est à noter sa relative stabilité à la température. Ceci est lié à la présence de longues chaînes de molécules de polyoléfines, UHMW polyoléfine (de l'anglais Ultra High Molecular Weight, ce qui signifie « à très haut degré de polymérisation ») et notamment UHMW polyéthylène qui ramollissent sous l'effet de la température mais ne coulent pas comme un liquide fondu. Ceci permet notamment d'éviter l'adhérence de deux couches de Teslin® entre elles grâce à cette propriété de stabilité à la température.

Ce matériau a en outre d'excellentes propriétés d'absorption d'une encre d'impression ce qui assure un excellent maintien des données ainsi imprimées.

De préférence, les paramètres de lamination prédéterminés comprennent une température comprise entre 10°C et 200°C et une pression comprise entre 10 et 200 Newton/cm² ainsi que, de préférence, une durée de lamination de quelques minutes à une heure ou deux.

En outre, par exemple, la couche interne 22 est réalisée dans un matériau comprenant essentiellement du PVC (polychlorure de vinyle). Un tel matériau lamine très facilement avec les couches externes 20A, 20B réalisées en Teslin®.

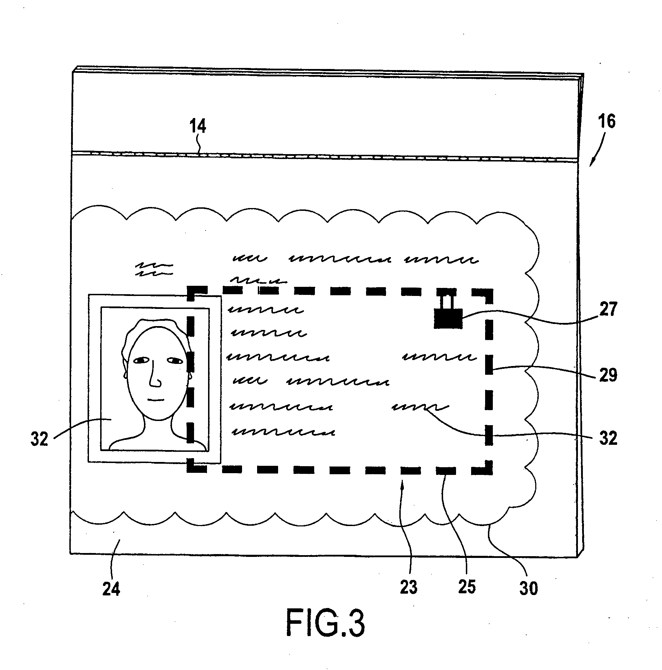

Par ailleurs, de préférence, comme cela est illustré en transparence sur **la** **figure 3****,** la feuille laminée 16 comprend au moins un élément de sécurité 23. Dans cet exemple, l'élément de sécurité 23 comprend un circuit électronique 25 composé d'une puce électronique 27 et/ou d'une antenne 29.

La puce 27 est dans ce cas alimentée par l'énergie produite lors du couplage électromagnétique entre l'antenne d'un lecteur externe (non représenté sur les figures) et l'antenne 29 du passeport 10. La puce 27 permet de mémoriser de manière sécurisée des informations relatives au détenteur du passeport 10. Des informations liées à l'identité du détendeur du passeport 10 sont ainsi destinées à être échangées entre le lecteur et le passeport muni d'un tel circuit électronique.

L'incorporation de l'élément de sécurité 23 dans le passeport 10 permet de rendre plus difficile les tentatives la falsification de passeport par un fraudeur du fait que le retrait de l'antenne 29 provoque la destruction de la feuille laminée 16.

En outre, grâce aux propriétés d'opacité des couches externes 20A, 20B, ces éléments de sécurité (puce et/ou antenne) ne sont pas visibles à l'oeil nu. Ainsi, par exemple, l'élément de sécurité 23 est incorporé préalablement dans la couche interne 22. La couche interne 22 est formée d'une pluralité de feuillets, par exemple quatre, laminés entre eux, entre lesquelles l'antenne 29 et la puce 27 sont insérées.

De préférence, au moins l'une des couches externes 20A, 20B comprend une face 24 portant des données 26. De préférence, les deux faces extérieures 24 de la pile de couches externes 20A, 20B et interne 22 portent des données 26.

Ces données 26 comprennent par exemple des données de personnalisation 30 et des données de sécurisation 32. Par exemple, les données de personnalisation 30 concernent l'identité du détenteur du passeport 10, comme son nom, son prénom et son adresse alors que les données de sécurisation 32 comprennent des éléments de sécurité, un graphisme sécuritaire, etc.

Dans cet exemple, seulement une des deux faces 24 porte des données de personnalisation et les deux faces 24 portent les données de sécurisation. Ainsi, la face 24A de la couche externe 20A porte des données de personnalisation 30 et de sécurisation 32 alors que la face 24B de la couche externe 20B porte uniquement des données de sécurisation 32.

Habituellement, les données de sécurisation 32 sont communes à tous les passeports 10 d'une même série de production alors que les données de personnalisation 30 sont spécifiques au détenteur de chaque passeport 10.

Afin de protéger les données 26, la feuille 16 comprend en outre une couche transparente 28 de protection des données 26. Par exemple, lorsque la face 24 ne porte que des données de sécurisation, la couche transparente 28 comprend un vernis 34 transparent adapté. Dans cet exemple, les données de sécurisation 32 sont imprimées en offset ou en sérigraphie.

De préférence, les données de personnalisation 30 sont imprimées au moyen d'un faisceau laser. Dans ce cas, de préférence, la couche transparente 28 est réalisée dans un matériau 36 marquable au laser.

Ainsi, par exemple, la couche transparente 28 est réalisée dans un matériau 36 qui comprend essentiellement du polyéthylène téréphtalate glycol et du polycarbonate. En effet, de façon connue en soi, le polycarbonate noircit lors de son irradiation par un faisceau laser.

On va maintenant décrire les principales étapes d'un procédé de fabrication du document de sécurité selon l'invention.

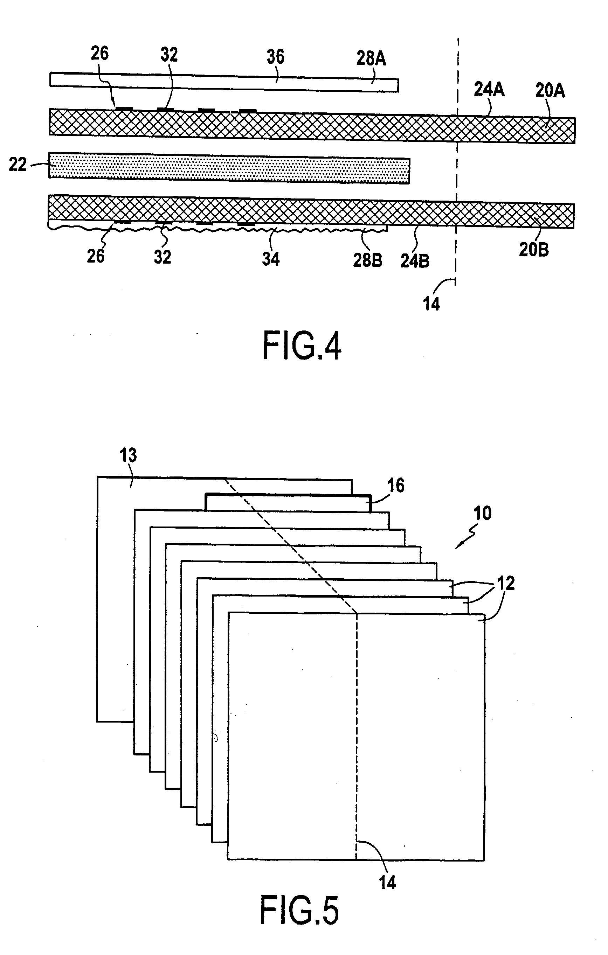

Au cours d'une première étape, illustré par **la** **figure 4****,** on imprime les données de sécurisation 32 sur l'une des faces 24 des couches externes 20A, 20B en offset ou en sérigraphie et dans cet exemple décrit, sur les deux faces 24A, 24B respectivement des couches externes 20A, 20B.

De façon optionnelle, des première 28A et deuxième 28B couches transparentes sont rapportées respectivement sur chacune des faces imprimées 24 des couches externes 20A, 20B ce qui permet d'assurer une protection des données ainsi imprimées et éviter encore toute falsification.

Ainsi, au cours de cette même étape, on rapporte une couche transparente 28B sur la face 24B portant uniquement des données de sécurisation 32 par impression d'une couche de vernis transparent 34.

Par exemple, la première couche transparente 28A, s'étendant sur la couche externe supérieure 20A, est réalisée dans un matériau marquable au laser 36.

Puis, au cours d'une seconde étape, on superpose les couches externes 20A, 20B et interne 22 entre elles de manière à ce que les couches externes 20A, 20B dépassent sensiblement de la couche interne 22 et à ce que la couche interne 22 ne dépasse pas la ligne de reliure 14.

Eventuellement, de façon optionnelle, on applique sur les surfaces de contact des couches externes 20A, 20B et de la couche interne 22, un produit fixant, tel que de la colle afin de maintenir les couches en position les unes par rapport aux autres.

Au cours d'une troisième étape, on soumet l'ensemble des couches à un cycle de lamination sans discernement des couches les unes des autres. De façon classique, la lamination est une opération qui consiste à appliquer une température et/ou une pression prédéterminées pour provoquer l'adhérence ou non des couches entre elles selon la composition des matériaux les constituant.

Les paramètres de lamination sont choisis parmi une température de lamination et/ou une pression de lamination. En faisant varier ces différents paramètres, il est possible de faire varier les conditions de lamination des couches.

La température et/ou la pression doit être choisie en fonction du matériau des couches constituant l'ensemble de manière à ce que les conditions de fusion du matériau de la couche interne 22 soient atteintes lors du cycle de lamination.

Dans cet exemple décrit, le cycle de lamination comprend deux phases, une première phase dite haute température et une deuxième phase dite basse température.

La première phase dite haute température est réalisée à température constante égale à 115°C. La pression a une valeur initialement inférieure à 10 Newton/cm² pendant une première durée T1, puis augmente pendant une deuxième durée T2 pour atteindre une valeur de 80 Newton/cm² et est maintenue à cette valeur pendant une troisième durée T3.

La deuxième phase dite basse température se déroule à pression et température constante de respectivement 145 Newton/cm² et 15°C pendant une quatrième durée T4.

Ainsi, avec les paramètres de lamination prédéterminés et les matériaux des couches externes 20A, 20B et interne 22, la couche interne 22 adhère avec les couches externes 20A, 20B dans la région R1, sans que les deux couches externes 20A, 20B n'adhèrent entre elles dans la région R2.

Enfin, au cours d'une quatrième étape illustrée sur **la** **figure 5****,** la feuille laminée 16 est rapportée à l'ensemble des autres feuilles 12. Puis, toutes les feuilles 12 sont reliées entre elles par exemple par une couture. Cette couture forme notamment la ligne de reliure 14 du livret. Enfin, une couverture rigide 13 est rapportée par collage à l'ensemble des feuilles 12 ainsi reliées.

Au cours d'une cinquième étape, la personnalisation du passeport est réalisée. Ainsi, un faisceau laser est dirigé sur la première couche transparente 28A réalisée dans un matériau marquable au laser 36 pour imprimer les données de personnalisation 32.

Grâce à l'invention, la feuille laminée 16 a des propriétés de flexibilité améliorées et ce de façon simple sans nécessiter un traitement spécifique pour chacune des différentes régions formant la feuille de données.

Il est bien entendu que les modes de réalisation qui viennent d'être décrits ne présentent aucun caractère limitatif et qu'ils pourront recevoir toute modification désirable sans sortir pour cela du cadre de l'invention tel que décrit par les revendications. En particulier, il serait conforme à l'invention de rapporter des couches supplémentaires à la pile de couches laminées formant la feuille de données.

La feuille laminée peut ou non porter des données imprimées. La feuille peut par exemple uniquement comporter des éléments de sécurité incorporés dans son corps. Bien entendu, des données de personnalisation peuvent être directement imprimées sur les couches externes.

## Revendications

1. Document de sécurité (10), tel qu'un passeport, comprenant une pluralité de feuilles (12) reliées entre elles le long d'une ligne de reliure (14) pour former un livret, parmi lesquelles au moins une feuille (16) comprend au moins deux couches externes (20A, 20B) et une couche interne (22) intercalée entre les deux couches externes (20A, 20B), les couches externes (20A, 20B) et interne (22) ayant chacune un format défini de manière à ce que les deux couches externes (20A, 20B) dépassent de la ligne de reliure (14) afin de relier la feuille (16) au livret, la couche interne (22) ayant un format défini de manière à ce qu'elle ne dépasse pas de la ligne de reliure (14), **caractérisé en ce que** les matériaux des couches externes (20A, 20B) et interne (22) sont choisis de manière à ce que la lamination des couches entre elles, avec des paramètres de lamination prédéterminés, provoque l'adhérence de la couche interne (22) avec les couches externes (20A, 20B) sans entraîner d'adhérence des couches externes (20A, 20B) entre elles au-delà de la ligne de reliure (14).

2. Document (10) selon la revendication précédente, dans lequel les couches externes (20A, 20B) sont réalisées dans le même matériau.

3. Document (10) selon la revendication 2, dans lequel le matériau d'au moins l'une des couches externes (20A, 20B) est à base de polyoléfine poreuse ayant une quantité prépondérante de charge silicieuse.

4. Document (10) selon la revendication précédente, dans lequel le matériau est un papier synthétique de la marque Teslin®.

5. Document (10) selon l'une quelconque des revendications précédentes, dans lequel la couche interne (22) est réalisée dans un matériau comprenant essentiellement du polychlorure de vinyle PVC.

6. Document (10) selon l'une quelconque des revendications précédentes, dans lequel la feuille laminée (16) comprend au moins un élément de sécurité (23), tel qu'un circuit électronique (25) composé d'une puce électronique (27) et/ou d'une antenne (29).

7. Document (10) selon l'une quelconque des revendications précédentes, dans lequel, au moins l'une des couches externes (20A, 20B) comprenant une face (24A, 24B) portant des données (26, 30, 32), la feuille (16) comprend en outre une couche transparente (28, 28A, 28B) de protection des données (26, 30, 32) portées par cette face (24, 24A, 24B).

8. Document (10) selon la revendication précédente, dans lequel la couche transparente (28, 28A) est réalisée dans un matériau marquable au laser (36) et les données (30) sont imprimées au moyen d'un faisceau laser.

9. Document (10) selon la revendication précédente, dans lequel la couche transparente (28, 28B) est réalisée dans un matériau (36) comprenant essentiellement du polyéthylène téréphtalate glycol et du polycarbonate.

10. Procédé de fabrication d'un document de sécurité (10), **caractérisé en ce que** le document (10) étant selon l'une quelconque des revendications précédentes, le procédé comprend une étape de laminage des couches (20A, 20B, 22) entre elles à des paramètres de lamination prédéterminés pour provoquer l'adhérence de la couche interne (22) avec les deux couches externes (20A, 20B) sans provoquer d'adhérence entre les deux couches externes (20A, 20B) entre elles au-delà de la ligne de reliure (14).

11. Procédé selon la revendication précédente, dans lequel les paramètres de lamination prédéterminés comprennent une température de lamination, une pression de lamination et/ou une durée de lamination.

## Patentansprüche

1. Sicherheitsdokument (1), wie ein Reisepass, umfassend eine Vielzahl von Blättern (12), die entlang einer Bindungslinie (14) untereinander verbunden sind, um ein Heft zu bilden, unter denen wenigstens ein Blatt (16) wenigstens zwei äußere Schichten (20A, 20B) und eine innere Schicht (22), die zwischen den beiden äußeren Schichten (20A, 20B) eingefügt ist, umfasst, wobei die äußeren Schichten (20A, 20B) und innere Schicht (22) jeweils ein definiertes Format aufweisen, derart, dass die beiden äußeren Schichten (20A, 20B) über die Bindungslinie (14) hinausragen, um das Blatt (16) mit dem Heft zu verbinden, wobei die innere Schicht (22) ein definiertes Format aufweist, derart, dass sie nicht über die Bindungslinie (14) hinausragt, **dadurch gekennzeichnet, dass** die Materialien der äußeren Schichten (20A, 20B) und inneren Schicht (22) derart gewählt sind, dass das Laminieren der Schichten untereinander, mit vorbestimmten Laminierparametern, das Haften der inneren Schicht (22) mit den äußeren Schichten (20A, 20B) bewirkt, ohne zu einem Haften der äußeren Schichten (20A, 20B) untereinander jenseits der Bindungslinie (14) zu führen.

2. Dokument (10) nach dem vorhergehenden Anspruch, wobei die äußeren Schichten (20A, 20B) aus dem gleichen Material gefertigt sind.

3. Dokument (10) nach Anspruch 2, wobei das Material von wenigstens einer der äußeren Schichten (20A, 20B) auf der Basis von porösem Polyolefin mit einer maßgeblichen Menge an kieselsäurehaltigem Füllstoff ist.

4. Dokument (10) nach dem vorhergehenden Anspruch, wobei das Material ein synthetisches Papier der Marke Teslin^{®} ist.

5. Dokument (10) nach einem der vorhergehenden Ansprüche, wobei die innere Schicht (22) aus einem Material, das im Wesentlichen Polyvinylchlorid PVC umfasst, gefertigt ist.

6. Dokument (10) nach einem der vorhergehenden Ansprüche, wobei das laminierte Blatt (16) wenigstens ein Sicherheitselement (23), wie einen elektronischen Schaltkreis (25) bestehend aus einem Chip (27) und/oder aus einer Antenne (29), umfasst.

7. Dokument (10) nach einem der vorhergehenden Ansprüche, wobei, da wenigstens eine der äußeren Schichten (20A, 20B) eine Daten (26, 30, 32) tragende Seite (24A, 24B) umfasst, das Blatt (16) ferner eine transparente Schicht (28, 28A, 28B) zum Schutz der Daten (26, 30, 32), die von dieser Seite (24, 24A, 24B) getragen sind, umfasst.

8. Dokument (10) nach dem vorhergehenden Anspruch, wobei die transparente Schicht (28, 28A) aus einem lasermarkierbaren Material (36) gefertigt ist und die Daten (30) mittels eines Laserstrahls aufgedruckt sind.

9. Dokument (10) nach dem vorhergehenden Anspruch, wobei die transparente Schicht (28, 28B) aus einem Material (36), das im Wesentlichen Polyethylenterephthalat Glycol und Polycarbonat umfasst, gefertigt ist.

10. Verfahren zur Herstellung eines Sicherheitsdokuments (10), **dadurch gekennzeichnet, dass**, da das Dokument (10) nach einem der vorhergehenden Ansprüche ist, das Verfahren einen Schritt zum Laminieren der Schichten (20A, 20B, 22) untereinander, mit vorbestimmten Laminierparametern umfasst, um das Haften der inneren Schicht (22) mit den beiden äußeren Schichten (20A, 20B) zu bewirken, ohne ein Haften zwischen den beiden äußeren Schichten (20A, 20B) untereinander jenseits der Bindungslinie (14) zu bewirken.

11. Verfahren nach dem vorhergehenden Anspruch, wobei die vorbestimmten Laminierparameter eine Laminiertemperatur, einen Laminierdruck und/oder eine Laminierdauer umfassen.

## Claims

1. A security document (10), such as a passport, comprising a plurality of sheets (12) connected together along a binding line (14) to form a booklet, at least one of which sheets (16) comprises at least two outer layers (20A, 20B) and an inner layer (22) inserted between the two outer layers (20A, 20B), each of the outer and inner layers (20A, 20B; 22) having a format defined in such a manner that the two outer layers (20A, 20B) project from the binding line (14) in order to connect the sheets (16) to the booklet, the inner layer (22) having a format defined in such a manner that it does not project from the binding line (14), the document being **characterized in that** the materials of the outer and inner layers (20A, 20B; 22) are selected in such a manner that laminating the layers together, with predetermined lamination parameters, causes the inner layer (22) to bond with the outer layers (20A, 20B) without causing the outer layers (20A, 20B) to bond together beyond the binding line (14).

2. A document (10) according to the preceding claim, wherein the outer layers (20A, 20B) are made of the same material.

3. A document (10) according to claim 2, wherein the material of at least one of the outer layers (20A, 20B) is based on porous polyolefin having a preponderant quantity of silica filler.

4. A document (10) according to the preceding claim, wherein the material is a synthetic paper of the Teslin® trademark.

5. A document (10) according to any preceding claim, wherein the inner layer (22) is made of a material essentially comprising polyvinyl chloride PVC.

6. A document (10) according to any preceding claim, wherein the laminated sheet (16) includes at least one security element (23), such as an electronic circuit (25) made up of an electronic chip (27) and/or an antenna (29).

7. A document (10) according to any preceding claim, wherein at least one of the outer layers (20A, 20B) includes a face (24A, 24B) carrying data (26, 30, 32), and the sheet (16) also includes a transparent layer (28, 28A, 28B) for protecting the data (26, 30, 32) carried by said face (24, 24A, 24B).

8. A document (10) according to the preceding claim, wherein the transparent layer (28, 28A) is made of a laser-markable material (36) and the data (30) is printed by means of a laser beam.

9. A document (10) according to the preceding claim, wherein the transparent layer (28, 28B) is made of a material essentially comprising polycarbonate and polyethylene terephthalate glycol.

10. A method of fabricating a security document (10), the method being **characterized in that** for the document (10), being a document according to any preceding claim, the method includes a step of laminating the layers (20A, 20B, 22) together with predetermined lamination parameters in order to cause the inner layer (22) to bond with both outer layers (20A, 20B) without causing the two outer layers (20A, 20B) to bond together beyond the binding line (14).

11. A method according to the preceding claim, wherein the predetermined lamination parameters comprise a lamination temperature, a lamination pressure, and/or a lamination duration.
